# EUROPÄISCHE PATENTSCHRIFT

(11) **EP 0 401 468 B1**
(45) Veröffentlichungstag und Bekanntmachung des Hinweises auf die Patenterteilung: **20.07.1994**
(21) Anmeldenummer: 90103545.1
(22) Anmeldetag: 23.02.1990
(51) Int. Cl.: F16K 31/02

(54) **Ventilanordnung zum gleichzeitigen Öffnen und Absperren zweier getrennter Zuleitungen für flüssige oder gasförmige Medien**
Valve arrangement for the simultaneous opening and closing of two separated supply pipes for liquid or gaseous agents
Dispositif de soupape pour ouvrir et fermer en même temps deux conduites séparées de gaz ou de liquides

(30) Priorität: 08.03.1989 DE 3907378
(43) Veröffentlichungstag der Anmeldung: 12.12.1990
(73) Patentinhaber: A. und K. Müller GmbH & Co. KG, D-40593 Düsseldorf (DE)
(72) Erfinder: Moldenhauer, Hermann, D-4000 Düsseldorf 12 (DE)
(74) Vertreter: Feder, Wolf-Dietrich, Dr. Dipl.-Phys.

(56) Entgegenhaltungen:
- DE-A- 3 642 669
- US-A- 3 443 585

## Beschreibung

Die Erfindung betrifft eine Ventilanordnung zum Öffnen und Absperren zweier getrennter Zuleitungen für flüssige oder gasförmige Medien mit unterschiedlichen Eigenschaften, insbesondere unterschiedlichem Druck, mit den Merkmalen aus dem Oberbegriff des Patentanspruchs 1.

Insbesondere im Sanitärbereich tritt häufig das Problem auf, daß zwei Zuleitungen, beispielsweise für kaltes und warmes Wasser, in einer Mischeinrichtung zusammengeführt werden, wobei die beiden Zuleitungen gemeinsam geöffnet oder geschlossen werden sollen. Die Einschaltung eines gemeinsamen Ventils nach der Zusammenführung der beiden Zuleitungen ist dann nicht möglich, wenn die beiden Zuleitungen unter sehr unterschiedlichen Wasserdrücken stehen. So kommt es beispielsweise vor, daß die Warmwasserbereitung in einem drucklosen Speicher vorgenommen wird und das Warmwasser an der Zapfstelle mit Kaltwasser mit einem Druck von beispielsweise 3 bar gemischt werden muß. In solchen Fällen ist eine gemeinsame Absperrung am Auslaß der Zapfstelle nicht möglich, weil das Kaltwasser in die Warmwasserleitung zurückgedrückt würde.

In solchen Fällen mußten bisher in den beiden Zuleitungen getrennt angeordnete Ventile verwendet werden, was einen erhöhten technischen Aufwand mit sich brachte.

Es sind eigenmediumbetätigte, durch Magnetanker gesteuerte Ventile bekannt, die jeweils für sich die Merkmale aus dem Oberbegriff des Patentanspruchs 1 aufweisen (siehe z.B. DE-A-36 42 669).

Der Erfindung liegt die Aufgabe zugrunde, eine Ventilanordnung der im Oberbegriff des Patentanspruchs 1 angegebenen Art so auszubilden, daß mit möglichst geringem Aufwand ein gemeinsames Öffnen und Schließen der beiden Zuleitungen möglich ist, auch wenn die in ihnen strömenden Medien einen erheblichen Druckunterschied besitzen. Die Ventilanordnung soll in inverser Richtung gegen möglichst hohen Unterdruck dicht sein, aber noch bei niedrigem Mediumsdrücken voll öffnen.

Die Lösung dieser Aufgabe erfolgt erfindungsgemäß mit den Merkmalen aus dem kennzeichnenden Teil des Patentanspruchs 1. Vorteilhafte Weiterbildungen der Erfindung sind in den Unteransprüchen beschrieben.

Der Grundgedanke der Erfindung besteht darin, in den beiden Zuleitungen getrennte Ventile vorzusehen, die aber durch ein gemeinsames Pilotventil angesteuert werden. Wie weiter unten anhand eines Ausführungsbeispiels näher erläutert, besitzt dieses gemeinsame Pilotventil zwar zwei Magnetanker, an denen die Magnetankerdichtungen angeordnet sind, aber nur eine Magnetspule, durch welche diese beiden Magnetanker betätigt werden. Auf diese Weise ist einerseits eine gute hydraulische Trennung der beiden Medien bei geschloss nen Ventilen sichergestellt, andererseits ist eine gleichzeitige Betätigung über das gemeinsame Magnetsystem bei geringem Aufwand möglich.

Die erfindungsgemäße Ventilanordnung ist in erster Linie zur Anwendung an Zuleitungen gedacht, die beide flüssige Medien, beispielsweise Wasser, führen. Sie ist aber auch mit Vorteil anwendbar an Zuleitungen, von denen eine ein flüssiges und die andere ein gasförmiges Medium führt oder auch an Zuleitungen, die beide gasförmige Medien führen.

Eine besonders gute Gegendruckdichtigkeit der erfindungsgemäßen Ventilanordnung wird erreicht, indem gemäß den Merkmalen aus den Patentansprüchen 5 und 6 die notwendige Schließkraft gegen Unterdruck auf zwei koaxial angeordnete Druckfedern verteilt wird, von denen eine direkt auf den Differentialkolben und die andere auf den Anker des Magnetsystems wirkt. Die Federn können dann so günstig dimensioniert werden, daß der kleinere Teil der Schließkraft von der auf den Differentialkolben wirkenden Druckfeder aufgebracht wird, während der Rest von der Rückholfeder aufgebracht wird und damit unmittelbar vom Magneten. Dies hat zur Folge, daß im geöffneten Zustand der Ventile die Niederdrucktauglichkeit nicht eingeschränkt ist.

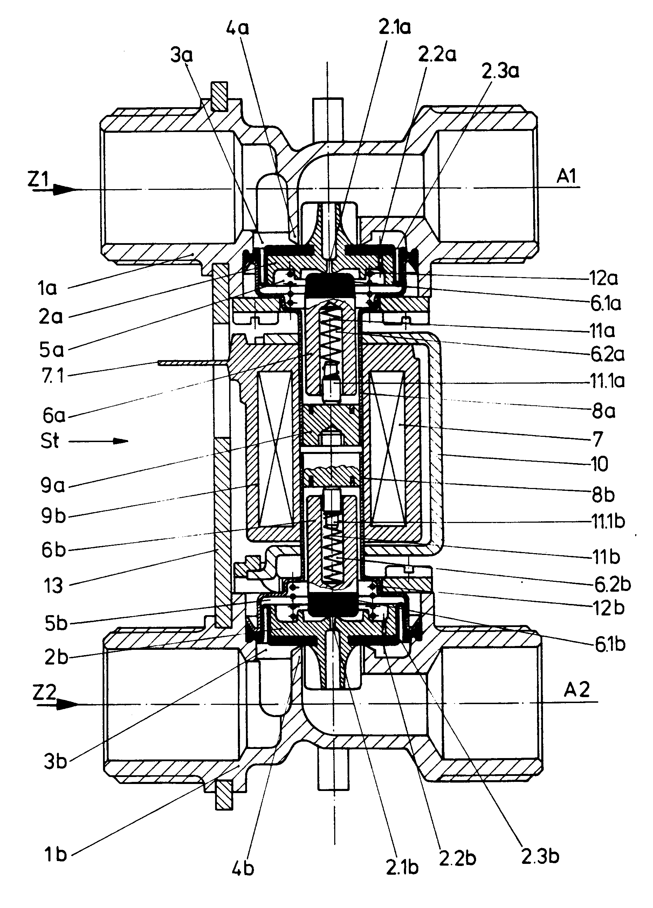

Im folgenden wird anhand der beigefügten Zeichnung ein Ausführungsbeispiel für eine Ventilanordnung nach der Erfindung näher erläutert.

In der Zeichnung ist eine Ventilanordnung im Schnitt dargestellt, die im Sanitärbereich, beispielsweise an einer Mischbatterie für kaltes und warmes Wasser, angeordnet sein kann.

Durch nicht dargestellte getrennte Zuleitungen strömt kaltes bzw. warmes Wasser mit unterschiedlichem Druck zu einem Zuleitungsanschluß Z1 und einem Zuleitungsanschluß Z2 und durch die weiter unten beschriebene Ventilanordnung zu einem Ableitungsanschluß A1 sowie einem Ableitungsanschluß A2, an die sich eine nicht dargestellte Mischeinrichtung anschließen kann.

Die Anschlüsse Z1 und A1 bzw. Z2 und A2 sind im dargestellten Ausführungsbeispiel in relativ geringem Abstand voneinander angeordnet, so daß zwischen ihnen die Ventilanordnung angeordnet sein kann. An den Zuleitungsanschluß Z1 schließt sich ein Ventilgehäuse 1a an, in dem ein Differentialkolben 2a verschiebbar angeordnet ist, der an seinen Rändern über eine Rollmembran 2.3a mit dem Ventilgehäuse verbunden ist. Der Differentialkolben 2a trägt einen Ventilteller, der in die Rollmembran 2.3a integriert ist und einem Ventilsitz 4a gegenüberliegt. Der Zuflußanschluß Z1, also der Druckanschluß, mündet in eine ringförmige Druckkammer 3a, die über den Ventilsitz 4a mit dem Abflußanschluß A1 verbunden ist. Auf der vom Ventilsitz 4a abgewandten Seite des Differentialkolbens 2a ist ein Steuerraum 5a angeordnet, der an einer Seite durch die Oberfläche des Differentialkolbens 2a bzw. durch die Rollmembran 2.3a begrenzt ist, während die anderen Begrenzungen durch die Innenflächen eines zum Magnetsystem gehörenden Führungsrohres 8a gebildet werden, das an dieser Stelle eine Verbreiterung aufweist.

Im Differentialkolben 2a befindet sich eine mittig angeordnete axiale Entlastungsbohrung 2.1a, durch die der Steuerraum 5a mit dem Abflußanschluß A1 verbunden ist. Weiterhin weist dem Differentialkolben 2a eine außermittig angeordnete axiale Steuerbohrung 2.2a auf, durch die der Steuerraum 5a mit dem Druckraum 3a verbunden ist. Die axiale Entlastungsbohrung 2.1a ist verschließbar durch eine Magnetankerdichtung 6.1a, die am äußeren Ende eines Magnetankers 6a angeordnet ist, welcher im Führungsrohr 8a verschiebbar geführt ist.

In analoger Weise ist der Zuflußanschluß Z2 über ein entsprechend aufgebautes Ventil mit dem Abflußanschluß A2 verbunden. Die der oben beschriebenen Ventilkonstruktion entsprechenden Bauteile sind mit den gleichen Bezugsziffern unter Hinzufügung des Index "b" bezeichnet.

Die beiden Ventile werden von einem gemeinsamen Magnetsystem St gesteuert mit einer auf einer Trägerplatte 13 angeordneten Magnetspule 7, welche einen elektrischen Anschluß 7.1 besitzt und in deren Längsachse ein Führungsrohr angeordnet ist, das aus zwei fluchtend zueinanderstehenden Rohrteilen 8a und 8b besteht. In den beiden Teilen 8a und 8b des Führungsrohres sind die beiden Magnetanker 6a und 6b verschiebbar geführt, an deren jeweils den Differentialkolben 2a und 2b zugewandten äußeren Enden die Magnetankerdichtngen 6.1a bzw. 6.1b angeordnet sind. Wie der Zeichnung zu entnehmen, sind die beiden Magnetanker 6a und 6b zu beiden Seiten der Quermittelebene der Magnetspule 7, also quasi spiegelsymmetrisch, angeordnet. Zwischen ihnen befinden sich zwei fest miteinander verschraubte, im Führungsrohr angeordnete Kopfstücke 9a und 9b, die als Anschlag für die beiden Magnetanker dienen. Die Magnetanker 6a und 6b weisen jeweils an der den Kopfstücken zugewandten Seite axiale Bohrungen 6.2a bzw. 6.2b auf, in denen jeweils eine Rückholfeder 11a bzw. 11b angeordnet ist, die sich über ein Anschlagstück 11.1a bzw. 11.1b am Kopfstück 9a bzw. 9b abstützt.

Im Steuerraum 5a bzw. 5b jedes Ventils ist zusätzlich koaxial zur Rückholfeder 11a bzw. 11b eine auf den Differentialkolben 2a bzw. 2b in Schließrichtung wirkende Schraubendruckfeder 12a bzw. 12b angeordnet.

Im folgenden wird anhand des mit dem Index "a" bezeichneten Ventils die Funktionsweise der Ventilanordnung beschrieben.

Das durch den Zuflußanschluß Z1 unter Druck zuströmende Medium gelangt über den Druckraum 3a und die Steuerbohrung 2.2a in den Steuerraum 5a. Die Flächenverhältnisse am Differentialkolben 2a sind so gewählt, daß bei durch die Magnetankerdichtung 6.1a verschlossener Entlastungsbohrung 2.1a der Differentialkolben 2a unter dem Druck des Mediums im Steuerraum 5a nach unten bewegt wird und sich das Ventil durch Aufsetzen des Ventiltellers auf den Ventilsitz 4a schließt.

Der gleiche Vorgang erfolgt bei dem gegenüberliegenden Ventil durch das durch den Zuflußanschluß Z2 zuströmende Medium.

Wird das Magnetsystem St erregt und durch Anziehen des Ankers 6a die Entlastungsbohrung 2.1a geöffnet, so tritt ein Druckausgleich zwischen dem Steuerraum 5a und dem Abfluß A1 auf, und der Differentialkolben 2a hebt sich aufgrund des im Druckraum 3a anstehenden Druckes, so daß sich das Ventil öffnet. Da mit dem Erregen des Magnetsystems auch gleichzeitig der andere Anker 6b angezogen wird, öffnet auch das andere Ventil und beide Medien strömen aus den Abflußanschlüssen A1 und A2 heraus.

Beim Entregen des Magnetsystems St werden die beiden Anker 6a und 6b infolge der Kräfte der Rückholfedern nach außen gedrückt und die Entlastungsbohrungen 2.1a bzw. 2.1b wieder verschlossen. Die dann auf den Differentialkolben 2a bzw. 2b wirkende Schließkraft setzt sich zusammen aus der Kraft der Rückholfeder 11a bzw. 11b und der Kraft der zusätzlichen Schraubenfeder 12a bzw. 12b. Aufgrund der koaxialen Anordnung und der Parallelschaltung der beiden Schraubendruckfedern 11a und 12a bzw. 11b und 12b kann die Rückstellfeder 12a für die Bewegung des Differentialkolbens 2a relativ klein dimensioniert werden und übernimmt nur einen Teil der notwendigen Schließkraft, was zur Folge hat, daß die Ventilanordnung eine hervorragende Niederdrucktauglichkeit aufweist.

## Patentansprüche

1. Ventilanordnung zum Öffnen und Absperren zweier getrennter Zuleitungen für flüssige Medien mit unterschiedlichen Eigenschaften, insbesondere unterschiedlichem Druck, wobei in jeder der Zuleitungen ein eigenmediumbetätigtes, durch Magnetanker(6a, 6b) gesteuertes Ventil angeordnet ist, mit einem in einem Ventilgehäuse (1a, 1b) bewegbar angeordneten, den Ventilteller tragenden Differentialkolben (2a, 2b), an dessen einer Seite ein mit dem Ventilzufluß verbundener Druckraum (3a, 3b) angeordnet ist, der über einen dem Ventilteller gegenüberliegenden Ventilsitz (4a, 4b) mit dem Ventilauslaß verbunden ist und an dessen anderer Seite ein Steuerraum (5a, 5b) angeordnet ist, der über eine mittig im Differentialkolben (2a, 2b) angeordnete, durch eine am Magnetanker (6a, 6b) angeordnete Magnetankerdichtung (6.1a, 6.1b) verschließbare Entlastungsbohrung (2.1a, 2.1b) mit dem Ventilauslaß und über eine außermittig im Differentialkolben (2a, 2b) angeordnete Steuerbohrung (2.2a, 2.2b) mit dem Druckraum (3a, 3b) verbunden ist, dadurch gekennzeichnet, daß zum gleichzeitigen Öffnen und Absperren der Zuleitungen die beiden Ventile eine gemeinsame elektromagnetische Steuervorrichtung (St) aufweisen mit einer Magnetspule (7), in deren Spulenachse ein Führungsrohr (8a, 8b) angeordnet ist, in welchem die beiden Magnetanker (6a, 6b) zu beiden Seiten der Quermittelebene der Magnetspule (7) verschiebbar angeordnet sind, wobei an den voneinander abgewandten Enden der Magnetanker (6a, 6b) die Magnetankerdichtungen (6.1a, 6.1b) angeordnet sind und zwischen den beiden Magnetankern (6a, 6b) im Bereich der Quermittelebene der Magnetspule (7) mindestens ein Kopfstück (9a, 9b) im Führungsrohr (8a, 8b) als Anschlag für die Magnetanker angeordnet ist und die Magnetspule (7) von einem Magnetjoch (10) umfaßt ist, welches von der Austrittsseite des einen Magnetankers (6a) zur Austrittsseite des anderen Magnetankers (6b) so geführt ist, daß es die Arbeitsluftspalte der beiden Magnetanker (6a, 6b) umfaßt.

2. Ventilanordnung nach Anspruch 1, dadurch gekennzeichnet, daß im Führungsrohr (8a, 8b) zwei aneinander angrenzende Kopfstücke (9a, 9b) angeordnet sind, die fest miteinander verbunden sind.

3. Ventilanordnung nach Anspruch 1 oder 2, dadurch gekennzeichnet, daß sich die Magnetanker (6a, 6b) gegen die Kraftwirkung einer Rückholfeder (11a, 11b) an dem Kopfstück (9a, 9b) abstützen.

4. Ventilanordnung nach Anspruch 3, dadurch gekennzeichnet, daß als Rückholfedern (11a, 11b) Schraubendruckfedern dienen, wobei jeder Magnetanker (6a, 6b) an seiner, dem Kopfstück (9a, 9b) zugewandten Seite eine Längsbohrung (6.2a, 6.2b) vorgegebener Tiefe aufweist, in der die Schraubendruckfeder (11a, 11b) angeordnet ist, die sich mit ihrem äußeren Ende über ein Anschlagstück (11.1a, 11.1b) am Kopfstück (9a, 9b) abstützt.

5. Ventilanordnung nach Anspruch 3 oder 4, dadurch gekennzeichnet, daß im Steuerraum (5a, 5b) koaxial zur Rückholfeder (11a, 11b) jeweils eine auf den Differentialkolben in Schließrichtung wirkende Schraubendruckfeder (11a, 11b) angeordnet ist.

6. Ventilanordnung nach Anspruch 5, dadurch gekennzeichnet, daß die Dimensionierung der Schraubendruckfedern (11a, 11b; 12a, 12b) derart ist, daß die im Steuerraum (5a, 5b) angeordnete Schraubendruckfeder (12a, 12b) ca. 30% der notwendigen Schließkraft gegen Unterdruck auf der Zuflußseite aufbringt, während die Rückholfeder (11a, 11b) die restlichen ca. 70% der Schließkraft aufbringt.

## Claims

1. Valve arrangement for opening and closing two separate supply pipes for liquid media with different properties, especially varying pressure, whereby each of the supply pipes contains an own medium-activated valve controlled by magnet armatures (6a, 6b) with a moving double diameter piston (2a, 2b) which carries the valve disc and is arranged in a valve box (1a, 1b), on one side of which piston connected to the valve outflow, there is a pressure space (3a, 3b) which is connected to the valve outflow via a valve face (4a, 4b) opposite the valve disc and on the other side of which piston there is a control space (5a, 5b) which is connected to the valve outflow by a relief bore (2.1a, 2.1b) in the centre of the double diameter piston (2a, 2b) which can be closed off by a magnet armature seal (6.1a, 6.1b) attached to the magnet armature and which is connected to the pressure space (3a, 3b) by an eccentric control bore (2.2a, 2.2b) in the double diameter piston (2a, 2b), characterised in that to enable the supply pipes to open and close simultaneously, both valves have a common electromagnetic control device (St) with a magnet coil (7) and a guide tube (8a, 8b) in its coil axis in which the two moving magnet armatures (6a, 6b) are movably positioned on both sides of the transverse mid-plane of the magnet coil (7) whereby the magnet armature seals (6.1a, 6.1b) are arranged at the ends of the magnet armatures (6a, 6b) facing away from each other and between the two magnet armatures (6a, 6b) in the area of the transverse mid-plane of the magnet coil (7) there is at least one head (9a, 9b) in the guide tube (8a, 8b) which acts as a stop for the magnet armatures and the magnet coil (7) is encompassed by a magnet yoke (10) which leads from the outlet side of one magnet armature (6a) to the outlet side of the other magnet armature (6b) in such a way that it encompasses the working air-gap of the two magnet armatures (6a, 6b).

2. Valve arrangement in accordance with claim 1, characterised by the fact that two adjacent heads (9a, 9b) fixed together are arranged in the guide tube (8a, 8b).

3. Valve arrangement in accordance with claim 1 or 2, characterised by the fact that the magnet armatures (6a, 6b) support themselves against the dynamic effect of a return spring (11a, 11b) at the head (9a, 9b).

4. Valve arrangement in accordance with claim 3, characterised by the fact that helical compression springs (11a, 11b) act as return springs whereby on the side of each magnet armature (6a, 6b) facing the head (9a, 9b) there is a longitudinal bore (6.2a, 6.2b) of specific depth in which the helical compression spring (11a, 11b) is located which supports itself at its external end by means of a stop (11.1a, 11.1b) at the head (9a, 9b).

5. Valve arrangement in accordance with claim 3 or 4, characterised by the fact that there is a helical compression spring (11a, 11b) located in the control space (5a, 5b) coaxial to the return spring (11a, 11b) which acts on the double diameter piston in the direction of closure.

6. Valve arrangement in accordance with claim 5, characterised by the fact that the helical compression springs (11a, 11b; 12a, 12b) are dimensioned so that the helical compression spring (12a, 12b) located in the control space (5a, 5b) applies approx. 30% of the necessary closing force against low pressure on the inflow side while the return spring (11a, 11b) applies the remaining 70% approx. of the closing force.

## Revendications

1. Agencement de vannes pour l'ouverture et l'arrêt de deux conduites distinctes d'arrivée de fluides sous forme liquide et de propriétés différentes, en particulier placés sous des pressions différentes, dans chacune des conduites d'arrivée étant disposée une vanne actionnée par le liquide et commandée par un induit magnétique (6a, 6b), comportant un piston différentiel (2a, 2b) supportant le plateau de vannes et disposé de manière mobile à l'intérieur d'un corps de vanne (1a, 1b), sur l'un des côtés du piston étant disposée une chambre de compression (3a, 3b) reliée à l'admission du fluide dans la vanne et reliée à l'échappement de la vanne par un siège de vanne (4a, 4b) faisant face au plateau, et sur l'autre côté dudit piston étant disposée une chambre de pilotage (5a, 5b) reliée à la chambre de compression (3a, 3b) par un alésage de commande (2.2a, 2.2b) disposé de manière décentrée à l'intérieur du piston différentiel (2a, 2b) et à l'échappement de la vanne par un alésage de délestage (2.1a, 2.1b) disposé au centre à l'intérieur du piston différentiel (2a, 2b) et fermé par un joint (6.1a, 6.1b) disposé sur l'induit magnétique (6a, 6b), caractérisé en ce que, pour l'ouverture et l'arrêt simultanés des conduites d'arrivée, les deux vannes présentent un dispositif de pilotage (St) électromagnétique commun comportant une bobine magnétique (7) dans l'axe de laquelle est disposé un tube de guidage (8a, 8b) à l'intérieur duquel sont disposés les deux induits magnétiques (6a, 6b) de manière mobile vers les deux côtés du plan transversal médian de la bobine magnétique (7), tandis que, sur les extrémités mutuellement opposées, des induits magnétiques (6a, 6b) sont disposés les joints (6.1a, 6.1b) et que, entre les deux induits (6a, 6b) dans la zone du plan transversal médian de la bobine (7), est disposé, à l'intérieur du tube de guidage (8a, 8b), au moins un élément de sommet (9a, 9b) servant de butée pour les induits magnétiques et que ladite bobine magnétique (7) est entourée d'une culasse magnétique (10) qui est guidée entre la sortie de l'un des induits magnétiques (6a) et la sortie de l'autre induit magnétique (6b) de telle sorte qu'elle entoure l'entrefer actif des deux induits magnétiques (6a, 6b).

2. Agencement de vannes selon la revendication 1, caractérisé en ce que, à l'intérieur du tube de guidage (8a, 8b), sont disposés deux éléments de sommet (9a, 9b) lesquels sont assemblés l'un à l'autre de manière fixe.

3. Agencement de vannes selon la revendication 1 ou 2, caractérisé en ce que les induits magnétiques (6a, 6b) s'appuient sur l'élément de sommet (9a, 9b) en s'opposant à la force exercée par un ressort de rappel (11a, 11b).

4. Agencement de vannes selon la revendication 3, caractérisé en ce que des ressorts hélicoïdaux de compression servent de ressorts de rappel (11a, 11b), chaque induit (6a, 6b) présentant sur son côté orienté vers l'élément de sommet (9a, 9b) un alésage longitudinal (6.2a, 6.2b) dans lequel est disposé le ressort hélicoïdal de compression (11a, 11b) qui s'appuie, par son extrémité extérieure, sur l'élément de sommet (9a, 9b) par un élément de butée (11.1a, 11.1b).

5. Agencement de vannes selon la revendication 3 ou 4, caractérisé en ce qui, à l'intérieur de la chambre de pilotage (5a, 5b) est disposé, coaxialement aux ressorts de rappel (11a, 11b), respectivement un ressort hélicoïdal de compression agissant en direction de la fermeture sur le piston différentiel.

6. Agencement de vannes selon la revendication 5, caractérisé en ce que le dimensionnement des ressorts hélicoïdaux de compression (11a, 11b ; 12a, 12b) est tel que le ressort hélicoïdal de compression (12a, 12b) disposé à l'intérieur de la chambre de pilotage (5a, 5b) constitue environ 30 % de la force de fermeture nécessaire pour s'opposer à la pression négative présente du côté de l'arrivée du flux, tandis que le ressort de rappel (11a, 11b) constitue les 70 % restants de cette force de fermeture.
